# EUROPEAN PATENT APPLICATION

(11) **EP 0 936 098 A2**
(43) Date of publication of application: **18.08.1999**
(21) Application number: 99301103.0
(22) Date of filing: 16.02.1999
(51) Int. Cl.: B60K 17/28

(54) **Power take-off unit having integral pump mounting flange**

(30) Priority: 16.02.1998 US 24025
(71) Applicant: DANA CORPORATION, Toledo, OH 43615 (US)
(72) Inventor: Sadanowicz, David T., Canton, MI 48188 (US)
(74) Representative: Cheyne, John Robert Alexander Mackenzie

(57) **Abstract**

A power take-off unit includes a hollow housing 20 having an input shaft 23, an idler shaft 33, and an output shaft 46 supported therein. The input shaft 23 is supported on the housing and carries an input gear 25 thereon that is adapted to be rotatably driven by an engine, transmission, or other source or rotational energy. The idler shaft 33 is supported on the housing and carries an idler gear 35 thereon that meshes with the input gear 25 so as to be rotatably driven thereby. A first end of the output shaft 46 is supported on an inwardly recessed side wall 20e formed integrally with the housing 20. A second end of the output shaft is supported on a bearing cap 43 secured about an opening 42 formed through a second side wall 20c of the housing. A clutch assembly 50 may be provided for selectively connecting the idler gear 35 to the output shaft 46. A mounting flange 51 is formed integrally with the housing 20 about the inwardly recessed side wall 20e and is adapted to facilitate the attachment of the driven accessory directly thereto. The mounting flange 51 may include a flat mounting surface 52 having a pair of apertures 53, 54 formed therethrough. The mounting flange 51 may further include an annular stepped recess 55 extending formed through the inwardly recessed side wall 20e of the housing 20 that functions as a pilot opening to facilitate the mounting of the driven accessory on the housing 20 of the power take-off unit and to insure that the input shaft of the driven accessory is co-axial with the output shaft 46 of the power take-off unit. The housing 20 of the power take-off unit significantly reduces the amount of physical space occupied by the power take-off unit and the driven accessory, and further enhances the flexibility of positioning the driven accessory relative to the power take-off unit.

## Description

### BACKGROUND OF THE INVENTION

This invention relates in general to power take-off units for selectively providing rotational power to a driven accessory provided on an engine driven vehicle. More specifically, this invention relates to an improved structure for mounting a driven accessory on such a power take-off unit.

Power take-off units are well known mechanical devices that are commonly used in conjunction with sources of rotational energy, such as vehicle engines and transmissions, for rotatably driving driven accessories. For example, power take-off units are commonly used in a variety of industrial and agricultural vehicles for operating hydraulic pumps that, in turn, operate hydraulically driven devices, such as plows, trash compactors, lifting mechanisms, winches, and the like.

A typical power take-off unit includes a rigid housing that is mounted on a case of a transmission of the vehicle. The mating surfaces of the housing of the power take-off unit and the case of the transmission having relatively large openings formed therethrough. The housing of the power take-off unit rotatably supports an input gear, an output gear that meshes with the input gear, and an output shaft that is adapted to be connected to the driven device. The input gear of the power take-off unit is rotatably supported within the housing such that a portion thereof extends outwardly through the openings formed into meshing engagement with one of the transmission gears that is constantly driven by the vehicle engine. As a result, the input gear and the output gear of the power take-of unit is constantly driven by the transmission gear and, thus, the engine of the vehicle.

In some instances, the output gear is directly connected to the output shaft such that the output shaft is also constantly driven. In other instances, however, a clutch assembly is provided for selectively connecting the output gear to the output shaft to permit intermittent operation of the driven accessory. Alternatively, a plurality of differently sized input and output gears may be supported within the housing of the power take-off unit so as to provide a plurality of speed reduction gear ratios between the input gear and the output shaft when the clutch assembly is engaged.

The input gear is usually rotatably supported on a non-rotatable input shaft that is contained within the housing of the power take-off unit. The ends of the non-rotatable input shaft are supported within respective bores formed through the housing of the power take-off unit. The ends of rotatable the output shaft, however, are rotatably supported in annular bearings that are supported on the housing of the power take-off unit. To facilitate assembly and maintenance, the opposed sides of the housing of the power take-off unit are removed, and respective bearing caps are secured to the housing by threaded fasteners for closing the open sides thereof. The bearing caps have central openings formed therethrough that respectively support the annular bearings therein. In this manner, the ends of the output shaft are rotatably supported on the housing of the power take-off unit.

Frequently, the driven accessory is itself supported on the housing of the power take-off unit for operation therewith. To accomplish this, the exterior surface of one of the bearing caps is formed with a flat mounting surface having a plurality of apertures formed therethrough. A corresponding flat mounting surface having a plurality of apertures formed therethrough is formed on a mounting flange provided on the driven accessory. In some instances, the driven accessory is supported on the housing of the power take-off unit by disposing the mounting surface of the accessory device in direct engagement with the mounting surface of the bearing cap, then securing the two together by threaded fasteners extending through the respective apertures. Although effective, this arrangement requires that the mounting surfaces of the bearing cap and the mounting flange of the driven accessory have essentially the same shape. Consequently, a given structure for the bearing cap mounting surface can accommodate only a single structure for the driven accessory mounting surface.

To facilitate the use of a wide variety of structures for the driven accessory mounting surface, an intermediate mounting flange adapter is usually connected between the mounting surface of the bearing cap and the mounting surface of the driven accessory. The mounting flange adapter includes a first mounting surface that is configured to cooperate with the mounting surface of the bearing cap and a second mounting surface that is configured to cooperate with the mounting surface of the accessory device. A plurality of relatively inexpensive mounting flange adapters can be provided to quickly and easily allow a wide variety of mounting flange structures of various driven accessories to be supported on the bearing cap of the power take-off unit.

As mentioned above, the power take-off unit is frequently provided on an engine driven vehicle for selectively providing rotational power to a driven accessory carried thereon. In the past, most vehicles have designed having a sufficiently large amount of physical space adjacent to the transmission so as to allow the power take-off unit and the driven accessory to be mounted thereon without interference with other components of the vehicle. More recently, however, the amount of such available physical space has decreased, creating potential interference problems with the other components of the vehicle when the power take-off unit and driven accessory are mounted thereon. Although the known driven accessory mounting structures described above (both with and without the intermediate mounting adapters) have functioned satisfactorily, it has been found that they occupy a relatively large amount of physical space and, therefore, cannot be readily used in some modern vehicles. Furthermore, the various gears of known power take-off units have traditionally been supported on only the input shaft and the output shaft, thus limiting the flexibility for positioning the output shaft relative to the input shaft in those vehicles where the amount of available physical space is limited. Thus, it would be desirable to provide an improved structure for a power take-off unit that minimizes the physical space occupied thereby, and further that provides improved flexibility for positioning the output shaft relative to the input shaft, so as to allow the power take-off unit and the driven accessory to be mounted in vehicles having a limited amount of physical space available adjacent to the engine and transmission.

### SUMMARY OF THE INVENTION

This invention relates to an improved structure for mounting a driven accessory on a power take-off unit so as to facilitate the mounting of the power take-off unit and the driven accessory in a vehicle having a limited amount of physical space available adjacent to the engine and transmission. The power take-off unit includes a hollow housing having an input shaft, an idler shaft, and an output shaft supported therein. The input shaft is supported on the housing and carries an input gear thereon that is adapted to be rotatably driven by an engine, transmission, or other source of rotational energy. The idler shaft is supported on the housing and carries an idler gear thereon that meshes with the input gear so as to be rotatably driven thereby. A first end of the output shaft is supported on an inwardly recessed side wall formed integrally with the housing. A second end of the output shaft is supported on a bearing cap secured about an opening formed through a second side wall of the housing. A clutch assembly may be provided for selectively connecting the idler gear to the output shaft. A mounting flange is formed integrally with the housing about the inwardly recessed side wall and is adapted to facilitate the attachment of the driven accessory directly thereto. The mounting flange may include a flat mounting surface having a pair of apertures formed therethrough. The mounting flange may further include an annular stepped recess extending formed through the inwardly recessed side wall of the housing that functions as a pilot opening to facilitate the mounting of the driven accessory on the housing of the power take-off unit and to insure that the input shaft of the driven accessory is co-axial with the output shaft of the power take-off unit. The housing of the power take-off unit significantly reduces the amount of physical space occupied by the power take-off unit and the driven accessory, and further enhances the flexibility of positioning the driven accessory relative to the power take-off unit.

Various objects and advantages of this invention will become apparent to those skilled in the art from the following detailed description of the preferred embodiment, when read in light of the accompanying drawings.

### BRIEF DESCRIPTION OF THE DRAWINGS

Fig. 1 is a perspective view of a first embodiment of a power take-off unit having a driven accessory mounted thereon in accordance with this invention.

Fig. 2 is an end elevational view of the first embodiment of the power take-off unit illustrated in Fig. 1, wherein the driven accessory has been removed for clarity.

Fig. 3 is a side elevational view of the first embodiment of the power take-off unit illustrated in Fig. 2.

Fig. 4 is a sectional elevational view of the first embodiment of the power take-off unit taken along line 4-4 of Fig. 3.

### DETAILED DESCRIPTION OF THE PREFERRED EMBODIMENT

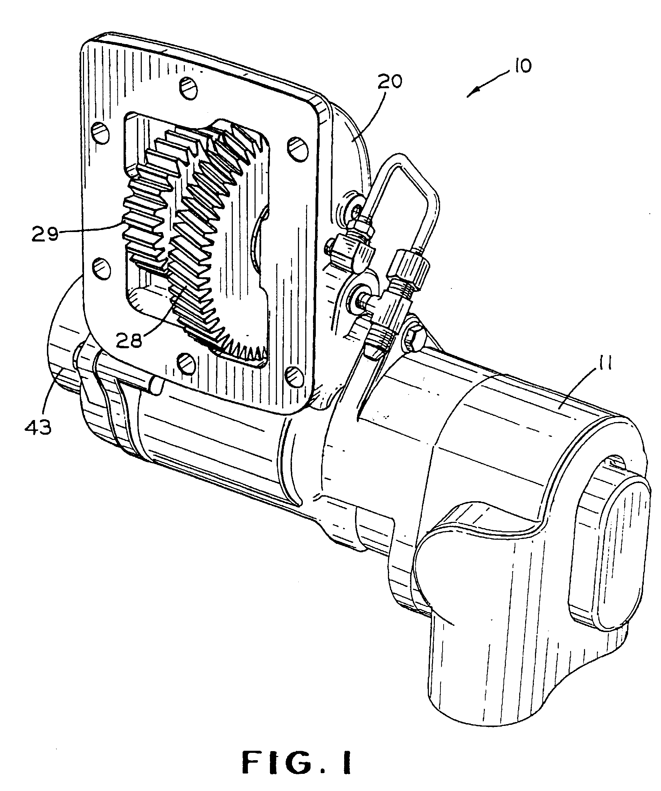

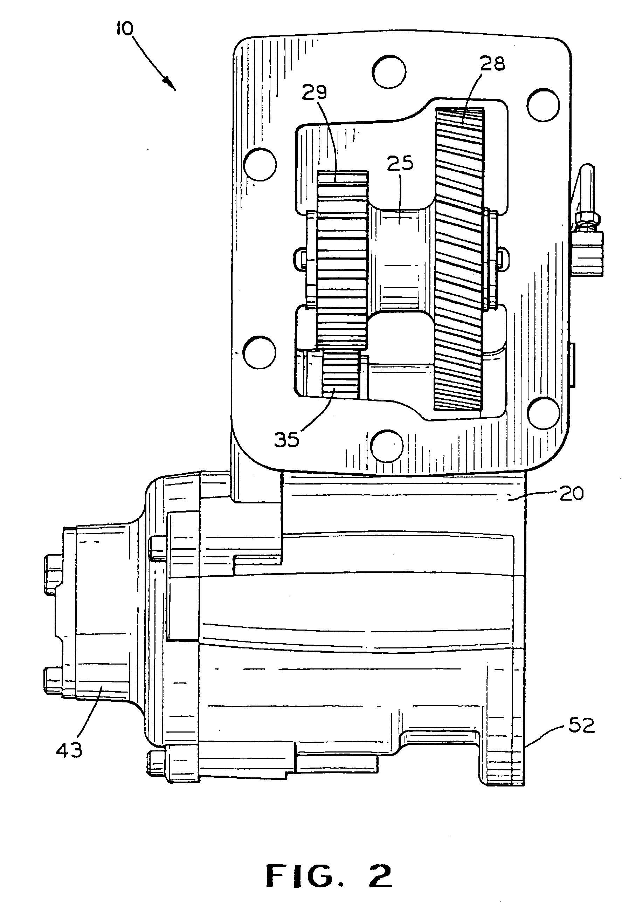

Referring now to the drawings, there is illustrated in Figs. 1, 2, and 3 a first embodiment of a power take-off unit, indicated generally at 10, in accordance with this invention. The structure and mode of operation of the power take-off unit 10 will be explained in detail below. A driven accessory 11 is secured to the power take-off unit 10 in a conventional manner. In the illustrated embodiment, the driven accessory 11 is a hydraulic pump that, when operated in the manner described below, generates a flow of hydraulic fluid to a hydraulically actuated device (not shown), such as a plow, a trash compactor, a lifting mechanism, or a winch. However, it will be appreciated that any known driven accessory 11 may be used with the power take-off unit 10 of this invention.

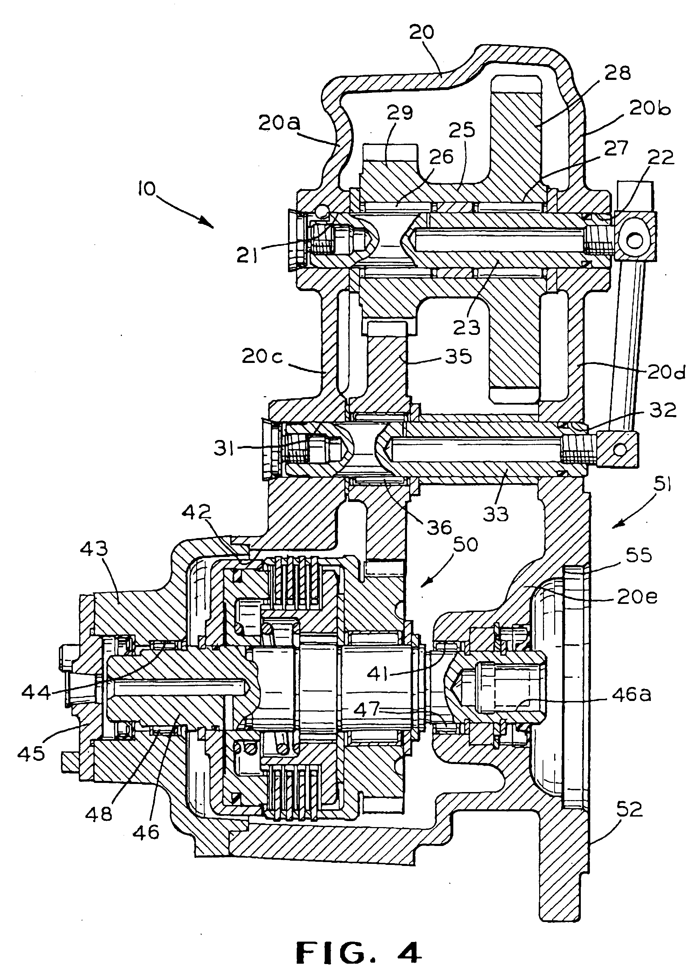

The illustrated power take-off unit 10 includes a hollow housing 20 that is formed from a strong, rigid material, preferably a metallic material. The structure of the housing 20 is best illustrated in Fig. 4. As shown therein, a first portion of the housing 20 (the upper portion when viewing Fig. 4) includes a pair of opposed side walls 20a and 20b formed integrally with the remainder of the housing 20 and having first and second input shaft bores 21 and 22 formed therethrough. The first and second input shaft bores 21 are preferably co-axially aligned with one another and are formed having approximately the same size. The opposed ends of a non-rotatable input shaft 23 are respectively received within the first and second input shaft bores 21 and 22 and are retained therein in any conventional manner.

An input gear 25 is rotatably mounted on the non-rotatable input shaft 23 by a pair of roller bearings 26 and 27 or other conventional means. The input gear 25 includes a first input gear portion 28 and a second input gear portion 29. The first input gear portion 28 is adapted to be connected to an engine or transmission (not shown) of a vehicle or other source of rotational energy so as to be rotatably driven in a conventional manner. As a result, the second input gear portion 29 is also rotatably driven. Although the first and second input gear portions 28 and 29 are shown as being formed integrally with one another, it will be appreciated that such gear portions 28 and 29 may be formed as separate components that are connected together for concurrent rotation.

A second portion of the housing 20 (the intermediate portion when viewing Fig. 4) includes a pair of opposed side walls 20c and 20d formed integrally with the remainder of the housing 20 and having first and second idler shaft bores 31 and 32 formed therethrough. Similar to the first and second input shaft bores 21 and 22, the first and second idler shaft bores 31 and 32 are preferably co-axially aligned with one another and are formed having approximately the same size. The opposed ends of a non-rotatable idler shaft 33 are respectively received within the first and second idler shaft bores 31 and 32 and are retained therein in any conventional manner. An idler gear 35 is rotatably mounted on the non-rotatable idler shaft 33 by a roller bearing 36 or other conventional means. The idler gear 35 meshes with the second input gear portion 29 of the input gear 25. Thus, when the input gear 25 is rotatably driven as described above, the idler gear 36 is also rotatably driven.

A third portion of the housing 20 (the lower portion when viewing Fig. 4) includes an inwardly recessed side wall 20e formed integrally with the remainder of the housing 20 and having a first output shaft bore 41 formed therethrough. The opposing side wall of the lower portion of the housing 20 is completely removed so as to provide a relatively large opening 42. The opening 42 is closed by a bearing cap 43 that is secured to the lower portion of the housing 20 by any conventional means. The bearing cap 43 is conventional in the art and has a second output shaft bore 44 formed therethrough. The outer portion of the bearing cap 43 is closed by an end cap 45 that is secured to the bearing cap by any conventional means. The first output shaft bore 41 formed through the inwardly recessed side wall 20e of the lower portion of the housing 20 and the second output shaft bore 44 formed through the bearing cap 43 are preferably co-axially aligned with one another and are formed having approximately the same size.

The opposed ends of a rotatable output shaft 46 are respectively received within a pair of roller bearings 47 and 48 or other conventional means disposed within the first and second output shaft bores 41 and 44. Thus, the output shaft 46 is freely rotatable relative to the housing 20. The illustrated output shaft 46 is formed having an internally splined hollow end portion 46a that is adapted to cooperate with an externally splined input shaft (not shown) provided on the driven accessory 11. Alternatively, the output shaft 46 may be formed having an externally splined or keyed portion (not shown) that is adapted to cooperate with an input shaft (not shown) provided on the driven accessory 11. Thus, the output shaft 46 is connected to operate the driven accessory 11.

The power take-off unit 10 includes a clutch assembly, indicated generally at 50, for selectively providing a driving connection between the input gear 25 and the output shaft 46. The clutch assembly 50 is conventional in the art and forms no part of this invention. When the clutch assembly 50 is engaged, the output shaft 46 is rotatably driven by the input gear 25 and the idler gear 36. As a result, the driven accessory 11 is operated by the power take-off unit 10. When the clutch assembly 50 is disengaged, the output shaft 46 is not rotatably driven by the input gear 25 and the idler gear 36, and the driven accessory 11 is not operated by the power take-off unit 10.

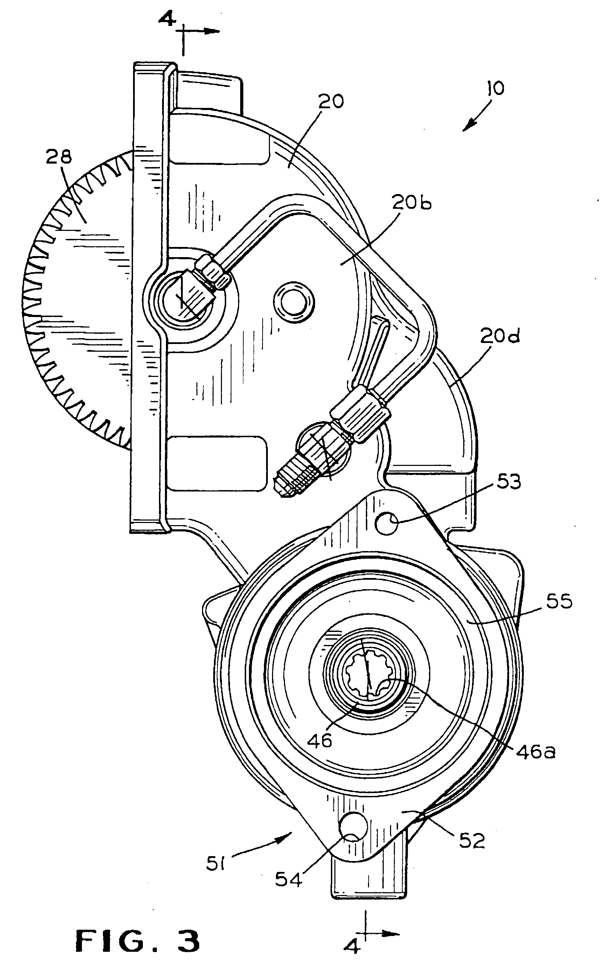

As discussed above, the inwardly recessed side wall 20e is formed integrally with the lower portion of the housing 20. As best shown in Figs. 3 and 4, a mounting flange, indicated generally at 51, is also formed integrally with the exterior of the lower portion of the housing 20. The mounting flange 51 is located about the inwardly recessed side wall 20e of the housing 20 and is adapted to facilitate the attachment of the driven accessory 11 directly thereto. For example, the illustrated mounting flange 51 includes a flat mounting surface 52 having a pair of apertures 53 and 54 formed therethrough. The apertures 53 and 54 are adapted to accommodate respective threaded fasteners (not shown) for mounting the driven accessory 11 directly on the housing 20 of the power take-off unit 10, as shown in Fig. 1. The mounting flange 51 may further include an annular stepped recess 55 extending about the first output shaft bore 41 formed through the inwardly recessed side wall 20e of the housing 20. The stepped recess 55 functions as a pilot opening to facilitate the mounting of the driven accessory 11 on the housing 20 of the power take-off unit 10 and to insure that the input shaft of the driven accessory 11 is co-axial with the output shaft 46.

The housing 20 of the power take-off unit 10 of this invention provides several significant advantages over known power take-off unit housings. First, as discussed above, a conventional power take-off unit has traditionally been provided with two bearing caps for rotatably supporting the output shaft relative to the housing, and the driven accessory has traditionally been supported on one of such bearing caps (or on mounting flange adapters connected to the bearing caps). This structure has been found to occupy a significant amount of physical space that, in some modern vehicles, can create potential interference problems with other components of the vehicle. By forming the inwardly recessed side wall 20e integrally with the housing 20 of this invention, and further by forming the mounting flange 51 integrally with such housing 20, the amount of physical space that is occupied by the power take-off unit 10 and the driven accessory II can be significantly reduced. Second, as also discussed above, a conventional power take-off unit has traditionally been provided with only an input shaft and an output shaft, thus limiting the flexibility for positioning the output shaft relative to the input shaft in those applications where physical space is limited. By providing the idler shaft 33 and the idler gear 35 intermediate of the input shaft 23 and the output shaft 46 of this invention, the options for positioning the output shaft 46 relative to the input shaft 23 are greatly enhanced. Thus, the housing 20 of the power take-off unit 10 of this invention significantly reduces the amount of physical space occupied by the power take-off unit 10 and the driven accessory 11, and further enhances the flexibility of positioning the driven accessory 11 relative to the power take-off unit 10.

In accordance with the provisions of the patent statutes, the principle and mode of operation of this invention have been explained and illustrated in its preferred embodiment. However, it must be understood that this invention may be practiced otherwise than as specifically explained and illustrated without departing from its spirit or scope.

## Claims

1. A power take-off unit adapted to connect a source of rotational energy to a driven accessory comprising;
a hollow housing;
an input shaft adapted to be connected to the source of rotational energy, said input shaft including a first end supported within a first input shaft bore formed through a side wall formed integrally with said housing and a second end supported within a second input shaft bore formed through a side wall formed integrally with said housing; and
an output shaft adapted to be connected to the driven accessory, said output shaft being rotatably driven by said input shaft and including a first end supported within a first output shaft bore formed through a side wall formed integrally with said housing and a second end supported in a second output shaft bore formed through a bearing cap formed separately from said housing, said bearing cap being secured to said housing about an opening formed through a side wall thereof.

2. The power take-off unit defined in Claim 1 wherein said input shaft carries an input gear that is adapted to be connected to the source of rotational energy, and said output shaft carries an output gear that is rotatably driven by said input gear, said output shaft being rotatably driven by said output gear.

3. The power take-off unit defined in Claim 2 further including a clutch assembly for selectively connecting said output gear to rotatably drive said output shaft.

4. The power take-off unit defined in Claim 1 wherein said first output shaft bore is formed through an inwardly recessed side wall of said housing.

5. The power take-off unit defined in Claim 4 wherein said inwardly recessed side wall of said housing has a stepped recess formed therein to facilitate the mounting of the driven accessory on said housing.

6. The power take-off unit defined in Claim 1 further including an idler shaft having a first end supported in a first idler shaft bore formed through said housing and a second end supported in a second idler shaft bore formed through said housing, said idler shaft being rotatably driven by said input shaft, said output shaft being rotatably driven by said idler shaft.

7. The power take-off unit defined in Claim 6 wherein said input shaft carries an input gear that is adapted to be connected to the source of rotational energy, said idler shaft carries an idler gear that is rotatably driven by said input gear, and said output shaft carries an output gear that is rotatably driven by said idler gear, said output shaft being rotatably driven by said output gear.

8. The power take-off unit defined in Claim 7 further including a clutch assembly for selectively connecting said output gear to rotatably drive said output shaft.

9. A power take-off unit adapted to connect a source of rotational energy to a driven accessory comprising:
a hollow housing;
an input shaft supported within said housing and adapted to be connected to the source of rotational energy, said input shaft carrying an input gear;
an idler shaft supported within said housing, said idler shaft carrying an idler gear that is rotatably driven by said input gear; and
an output shaft supported within said housing and adapted to be connected to the driven accessory, said output shaft carrying an output gear that is rotatably driven by said idler gear, said output shaft being rotatably driven by said output gear.

10. The power take-off unit defined in Claim 9 wherein said input shaft includes a first end supported within a first input shaft bore formed through a side wall formed integrally with said housing and a second end supported within a second input shaft bore formed through a side wall formed integrally with said housing.
